# EUROPÄISCHE PATENTANMELDUNG

(11) **EP 2 078 878 A2**
(43) Veröffentlichungstag der Anmeldung: **15.07.2009**
(21) Anmeldenummer: 08171623.5
(22) Anmeldetag: 15.12.2008
(51) Int. Cl.: F16D 13/52, F16D 3/14

(54) **Kopplungsanordnung zur wahlweisen Drehkopplung einer Eingangswelle, insbesondere eines Kompressors in einem Fahrzeug, mit einem Antriebsorgan**

(30) Priorität: 09.01.2008 DE 102008003705
(71) Anmelder: ZF Friedrichshafen AG, 88038 Friedrichshafen (DE)
(72) Erfinder: Groß, Matthias, 97447 Gerolzhofen (DE); Markow, Alexander, 97424 Schweinfurt (DE)

(57) **Zusammenfassung**

Eine Kopplungsanordnung zur wahlweisen Drehkopplung einer Eingangswelle, insbesondere eines Kompressors in einem Fahrzeug, mit einem Antriebsorgan umfasst einen mit dem Antriebsorgan zur gemeinsamen Drehung um eine Drehachse (A) zu koppelnden ersten Reibelemententräger (14), mit welchem die Reibelemente (22) einer ersten Gruppe (24) von Reibelementen drehfest und bezüglich diesem axial bewegbar gekoppelt sind, einen mit der Eingangswelle (30) zur gemeinsamen Drehung um die Drehachse (A) zu koppelnden zweiten Reibelemententräger (26), mit welchem die Reibelemente (38) einer zweiten Gruppe (40) von Reibelementen drehfest und bezüglich diesem axial bewegbar gekoppelt sind, eine Kraftbeaufschlagungsanordnung (46), durch welche die Reibelemente (22, 38) der ersten Gruppe (24) und der zweiten Gruppe (40) über eine Anpressplatte (44) in Reibwechselwirkung miteinander pressbar sind, im Drehmomentübertragungsweg von dem Antriebsorgan zum ersten Reibelemententräger (14) oder/und im Drehmomentübertragungsweg von dem zweiten Reibelemententräger (26) zu der Eingangswelle eine Torsionsschwingungsdämpferanordnung (18).

## Beschreibung

Die vorliegende Erfindung betrifft eine Kopplungsanordnung zur wahlweisen Drehkopplung einer Eingangswelle, insbesondere eines Kompressors in einem Fahrzeug, mit einem Antriebsorgan, umfassend einen mit dem Antriebsorgan zur gemeinsamen Drehung um eine Drehachse zu koppelnden ersten Reibelemententräger, mit welchem die Reibelemente einer ersten Gruppe von Reibelementen drehfest und bezüglich diesem axial bewegbar gekoppelt sind, einen mit der Eingangswelle zur gemeinsamen Drehung um die Drehachse zu koppelnden zweiten Reibelemententräger, mit welchem die Reibelemente einer zweiten Gruppe von Reibelementen drehfest und bezüglich diesem axial bewegbar gekoppelt sind und eine Kraftbeaufschlagungsanordnung, durch welche die Reibelemente der ersten Gruppe und der zweiten Gruppe über eine Anpressplatte in Reibwechselwirkung miteinander pressbar sind.

Derartige Kopplungsanordnungen dienen insbesondere in Lastkraftwagen dazu, die beispielsweise an einer Nebenabtriebswelle oder Nebenabtriebsseite eines Antriebsaggregats, wie zum Beispiel einer Brennkraftmaschine, abgegriffenen Drehmomente wahlweise auf eine Eingangswelle, im Allgemeinen ausgebildet als Kurbelwelle, eines Kompressors zu leiten. Mit diesem Kompressor kann dann die in verschiedenen Systembereichen erforderliche Druckluft bereitgestellt werden, beispielsweise um eine Luftdruckbremsanlage betreiben zu können. Insbesondere dann, wenn als Antriebsaggregat eine Brennkraftmaschine eingesetzt wird, welche durch die periodisch stattfindenden Zündprozesse entsprechende Drehungleichförmigkeiten abgibt, ist eine derartige Kopplungsanordnung einer hohen Belastung ausgesetzt. Auch die über eine derartige Kopplungsanordnung anzutreibenden Kompressoren, die im Allgemeinen ebenfalls als Hubkolbenmaschinen ausgebildet sind, generieren Drehungleichförmigkeiten, die über die Kopplungsanordnung zurück in Richtung Antriebsaggregat bzw. Antriebsstrang eines Fahrzeugs wirken können und dabei insbesondere Baugruppen, die ein Drehmoment zwischen dem Antriebsaggregat und der Kopplungsanordnung übertragen, belasten. Wenn das Drehmoment über Verzahnungen übertragen wird, kommt es zu deutlich wahrnehmbaren Rasselgeräuschen.

Es ist die Aufgabe der vorliegenden Erfindung, eine Kopplungsanordnung zur wahlweisen Drehkopplung einer Eingangswelle, insbesondere eines Kompressors in einem Fahrzeug, mit einem Antriebsorgan, vorzusehen, welche vor auf diese zu übertragende Drehungleichförmigkeiten bzw. vor Weiterleitung von derartigen Drehungleichförmigkeiten geschützt werden kann.

Erfindungsgemäß wird diese Aufgabe gelöst durch eine Kopplungsanordnung zur wahlweisen Drehkopplung einer Eingangswelle, insbesondere eines Kompressors in einem Fahrzeug, mit einem Antriebsorgan, umfassend einen mit dem Antriebsorgan zur gemeinsamen Drehung um eine Drehachse zu koppelnden ersten Reibelemententräger, mit welchem die Reibelemente einer ersten Gruppe von Reibelementen drehfest und bezüglich diesem axial bewegbar gekoppelt sind, einen mit der Eingangswelle zur gemeinsamen Drehung um die Drehachse zu koppelnden zweiten Reibelemententräger, mit welchem die Reibelemente einer zweiten Gruppe von Reibelementen drehfest und bezüglich diesem axial bewegbar gekoppelt sind, eine Kraftbeaufschlagungsanordnung, durch welche die Reibelemente der ersten Gruppe und der zweiten Gruppe über eine Anpressplatte in Reibwechselwirkung miteinander pressbar sind, und im Drehmomentübertragungsweg von dem Antriebsorgan zum ersten Reibelemententräger oder/und im Drehmomentübertragungsweg von dem zweiten Reibelemententräger zu der Eingangswelle eine Torsionsschwingungsdämpferanordnung.

Bei der erfindungsgemäßen Kopplungsanordnung ist also im Drehmomentübertragungsweg vor oder/und nach den in Reibwechselwirkung miteinander zu bringenden Gruppen von Reibelementen eine Torsionsschwingungsdämpferanordnung vorgesehen. Diese stellt eine wirksame Entkopplung hinsichtlich möglicherweise auftretender bzw. übertragener Drehungleichförmigkeiten bereit, so dass einerseits die Kopplungsanordnung selbst vor durch derartige Drehungleichförmigkeiten induzierten Überlastungen geschützt wird, andererseits dafür gesorgt wird, dass derartige Ungleichförmigkeiten nicht zwischen einem Antriebsaggregat und einem angetriebenen Aggregat, also beispielsweise einem Kompressor, übertragen werden.

Beispielsweise kann vorgesehen sein, dass die Torsionsschwingungsdämpferanordnung eine Primärseite in Verbindung mit dem Antriebsorgan, eine Sekundärseite in Verbindung mti dem ersten Reibelemententräger sowie eine die Primärseite und die Sekundärseite koppelnde Dämpferelementenanordnung umfasst, wobei vorzugsweise das Antriebsorgan einen Bereich der Primärseite bereitstellt oder/und der erste Reibelemententräger einen Bereich der Sekundärseite bereitstellt. Es kann somit also eine Bauteileverschmelzung erzielt werden, was einerseits den erforderlichen Bauraum mindert und andererseits zu einem vergleichsweise kostengünstigen, gleichwohl jedoch zu einem stabilen Aufbau beiträgt.

Die Torsionsschwingungsdämpferanordnung kann dabei beispielsweise derart aufgebaut sein, dass die Primärseite ein Zentralscheibenelement umfasst und die Sekundärseite wenigstens bereichsweise beidseits des Zentralscheibenelements Deckscheibenbereiche umfasst. Dabei kann beispielsweise dann der erste Reibelemententräger im Wesentlichen einen Deckscheibenbereich bereitstellen. Bei einer alternativen Ausgestaltungsform kann die Torsionsschwingungsdämpferanordnung in das Antriebsorgan selbst integriert sein.

Auch bei derartiger Integration kann die Torsionsschwingungsdämpferanordnung derart aufgebaut sein, dass sie eine Primärseite und eine über eine Dämpferelementenanordnung mit der Primärseite gekoppelte Sekundärseite umfasst, welche mit dem ersten Reibelemententräger verbunden ist.

Bei einer alternativen Variante kann die Torsionsschwingungsdämpferanordnung wenigstens ein Torsionselement umfassen. Dabei wird also eine Schwingungsdämpfung nicht durch die Längenkompression beispielsweise von Schraubendruckfedern einer Dämpferelementenanordnung realisiert, sondern durch die Torsion eines bzw. mehrerer im Allgemeinen um die Drehachse tordierbarer Torsionselemente erzielt.

Bei einer alternativen oder zusätzlich vorzusehenden Variante wird vorgeschlagen, dass der zweite Reibelemententräger mit einer Primärseite der Torsionsschwingungsdämpferanordnung verbunden ist oder einen Bereich derselben bereitstellt, dass die Eingangswelle mit einer Sekundärseite der Torsionsschwingungsdämpferanordnung verbunden ist oder einen Bereich derselben bereitstellt und dass die Primärseite und die Sekundärseite über eine Dämpferelementenanordnung miteinander gekoppelt sind. Hier liegt also im Drehmomentenfluss von einem Antriebsaggregat zu einem angetriebenen Aggregat die Torsionsschwingungsdämpferanordnung dann nach den beiden Gruppen von Reibelementen und entkoppelt somit primär die Kopplungsanordnung von dem anzutreibenden Aggregat, also beispielsweise einem Kompressor.

Um die erfindungsgemäße Anordnung vor äußeren Einflüssen zu schützen, wird vorgeschlagen, dass die Torsionsschwingungsdämpferanordnung und der erste Reibelemententräger mit der ersten Gruppe von Reibelementen sowie der zweite Reibelemententräger mit der zweiten Gruppe von Reibelementen in einem Gehäuse angeordnet sind.

Wenn weiter vorgesehen ist, dass das Gehäuse gegen Fluidaustritt abgeschlossen ist, kann die gesamte Anordnung durch ein gemeinsames Fluid betrieben bzw. geschmiert und gekühlt werden, das dann auch über einen gemeinsamen Sumpf abgezogen und wieder in den Arbeitskreislauf rückgeführt werden kann.

Die vorliegende Erfindung betrifft ferner eine Kombination eines Kompressors, insbesondere für ein Fahrzeug, mit einer erfindungsgemäßen Kopplungsanordnung, deren zweiter Reibelemententräger mit einer Eingangswelle des Kompressors zur gemeinsamen Drehung um die Drehachse verbunden ist.

Die vorliegende Erfindung wird nachfolgend mit Bezug auf die beiliegenden Figuren detailliert beschrieben. Es zeigt:
- Fig. 1: eine Längsschnittansicht einer erfindungsgemäßen Kopplungs-anordnung in Zuordnung zu einem nur teilweise dargestellten Kompressor;
- Fig. 2: eine vergrößerte Ansicht der Kopplungsanordnung der Fig. 1, geschnitten längs einer Linie II-II in Fig. 5;
- Fig. 3: eine der Fig. 2 entsprechende Ansicht der Kopplungsanordnung, geschnitten längs einer Linie III-III in Fig. 5;
- Fig. 4: eine Teil-Explosionsansicht der in den Fig. 2 und 3 gezeigten Kopplungsanordnung;
- Fig.5: eine Axialansicht der in den Fig. 2 und 3 gezeigten Kopplungsanordnung;
- Fig.6: eine der Fig. 1 entsprechende Ansicht einer alternativen Ausgestaltungsform;
- Fig. 7: die bei der Fig. 6 erkennbare Kopplungsanordnung vergrößert und geschitten längs einer Linie VII-VII in Fig. 10;
- Fig. 8: eine der Fig. 7 entsprechende Ansicht, geschnitten längs einer Linie VIII-VIII in Fig. 10;
- Fig. 9: die Kopplungsanordnung der Fig. 7 und 8 in teilweise explodierter Darstellung;
- Fig. 10: eine Axialansicht der in den Fig. 7 und 8 gezeigten Kopplungs-anordnung;
- Fig. 11: eine Prinzip-Teillängsschnittansicht einer erfindungsgemäßen Ausgestaltungsform der Kopplungsanordnung;
- Fig. 12: eine der Fig. 11 entsprechende Ansicht einer alternativen Ausgestaltungsform;
- Fig. 13: eine der Fig. 11 entsprechende Ansicht einer alternativen Ausgestaltungsform;
- Fig. 14: eine der Fig. 11 entsprechende Ansicht einer alternativen Ausgestaltungsform;
- Fig. 15: eine der Fig. 11 entsprechende Ansicht einer alternativen Ausgestaltungsform;
- Fig. 16: eine der Fig. 11 entsprechende Ansicht einer alternativen Ausgestaltungsform;
- Fig. 17: eine der Fig. 11 entsprechende Ansicht einer alternativen Ausgestaltungsform.

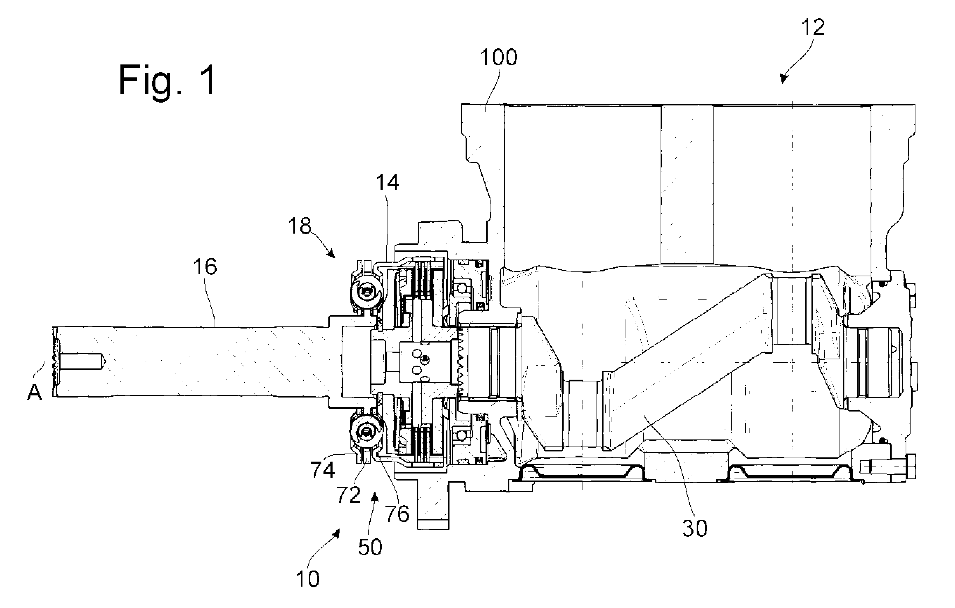

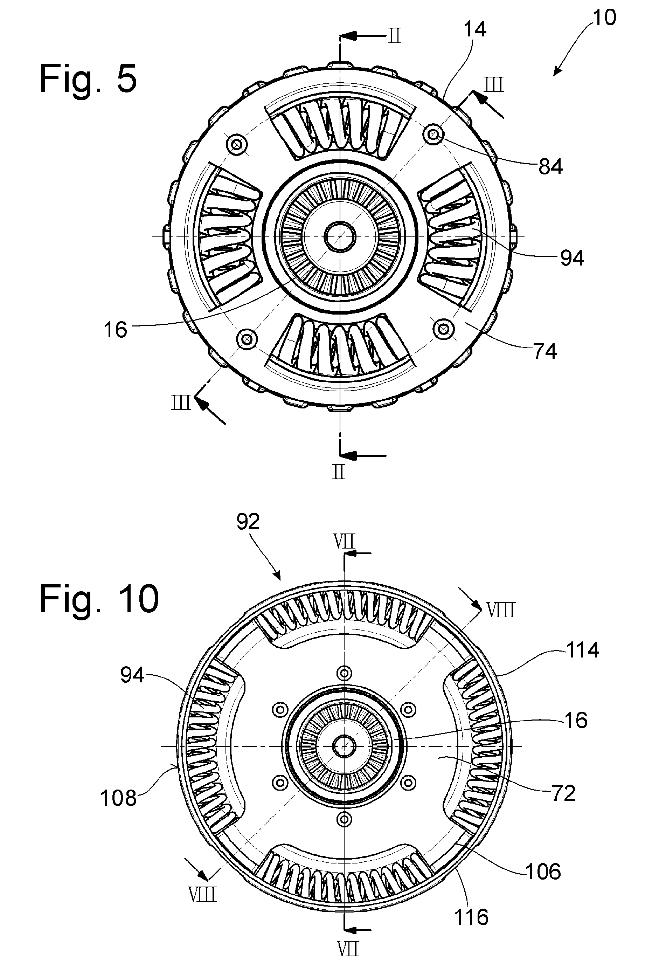

In den Fig. 1 bis 5 ist eine erste Ausgestaltungsform einer Kopplungsanordnung 10 gezeigt, mit welcher ein Antriebsdrehmoment an einem Antriebsaggregat, beispielsweise einer Brennkraftmaschine, über eine Nebenabtriebswelle oder eine Nebenabtriebsseite desselben zu einem in einem Fahrzeug angeordneten Kompressor 12 übertragen werden kann. Das Antriebsorgan umfasst im dargestellten Beispiel einen wellenartigen Abschnitt 16, der über eine noch zu beschreibende Torsionsschwingungsdämpferanordnung 18 mit einem im Wesentlichen schalenartig oder topfartig ausgebildeten ersten Reibelemententräger 14 verbunden ist. Der wellenartige Abschnitt kann an seinem in der Fig. 1 links erkennbaren Bereich über eine Verzahnungsformation in Drehkopplungseingriff mit einem Antriebsrad, beispielsweise einem Zahnrad oder einer Riemenscheibe, gebracht werden, um auf diese Art und Weise ein Antriebsdrehmoment aufnehmen und zum ersten Reibelemententräger 14 weiterleiten zu können.

Der erste Reibelemententräger 14 weist in einem Umfangswandungsbereich eine Innenverzahnung 20 auf. Mit dieser Innenverzahnung 20 sind die als Lamellen allgemein bezeichneten Reibelemente 22 einer ersten Gruppe 24 von Reibelementen zur gemeinsamen Drehung um die Drehachse A gekoppelt. Da die Innenverzahnung 20 in Richtung der Drehachse A langgestreckt ist, können die Reibelemente 22 der ersten Gruppe 24 sich zumindest in geringem Ausmaß auch axial bezüglich des ersten Reibelemententrägers 14 bewegen.

Ein zweiter Reibelemententräger 26 weist an einem ringartigen Erweiterungsbereich 34 eine in Richtung der Drehachse A langgestreckte Außenverzahnung 36 auf, an welcher die Reibelemente bzw. Lamellen 38 einer zweiten Gruppe 40 von Reibelementen axial bewegbar zur gemeinsamen Drehung mit dem zweiten Reibelemententräger 26 gekoppelt sind. Man erkennt, dass jeweils ein Reibelement 22 der ersten Gruppe 24 oder ein Reibelement 38 der zweiten Gruppe 40 einander abwechselnd aufeinander folgen.

Eine Widerlagerplatte 42 ist an dem zweiten Reibelemententräger 26 festgelegt, beispielsweise durch Verschweißung oder Verschraubung. Diese Widerlagerplatte 42 ist an einer ersten axialen Seite der beiden Gruppen 24, 40 vorgesehen und bildet die axiale Abstützung für die beiden Gruppen 24, 40 von Reibelementen. An der anderen, zweiten axialen Seite der beiden Gruppen 34, 40, also beispielsweise der einer Brennkraftmaschine zugewandten axialen Seite, ist eine Anpressplatte 44 vorgesehen. Diese kann beispielsweise mit den Reibelementen 38 der zweiten Gruppe 40 zusammen am zweiten Reibelemententräger 26 drehfest, jedoch in bestimmtem Ausmaß axial bewegbar gehalten sein.

Eine als Kraftspeicher bzw. Kraftbeaufschlagungsanordnung wirksame Tel-lerfeder 46 ist in ihrem radial äußeren Bereich an einer Abstützplatte 48 axial abgestützt. Diese Abstützplatte 48 ist durch einen Sicherungsring 32 am zweiten Reibelemententräger 26 bezüglich diesem axial festgehalten. In einem radial mittleren Bereich belastet die Tellerfeder 46 die Anpressplatte 44 unter Abstützung an der Abstützplatte 48 in Richtung auf die beiden Gruppen 24, 40 und auf die Widerlagerplatte 42 zu. Durch diese Beaufschlagung ist also eine die beiden Reibelemententräger 14, 26 und die beiden Gruppen 24, 40 von Reibelementen umfassende Lamellenkupplung 50 in einen Einrückzustand vorgespannt.

Am radial inneren Bereich der Tellerfeder 46 ist diese durch einen grundsätzlich axial auf dem zweiten Reibelemententräger 26 verlagerbaren Druckring 52 axial belastbar. Ein an der anderen axialen Seite der beiden Gruppen 24, 40 liegender weiterer Druckring 54 beaufschlagt den erstgenannten Druckring 52 über mehrere die ringartige Erweiterung 34 des zweiten Reibelemententrägers 26 überbrückende Übertragungselemente 56. Diese können beispielsweise mit einem der beiden Druckringe 52, 54 integral ausgebildet sein, können aber auch als separate, bolzenartige Elemente ausgebildet sein.

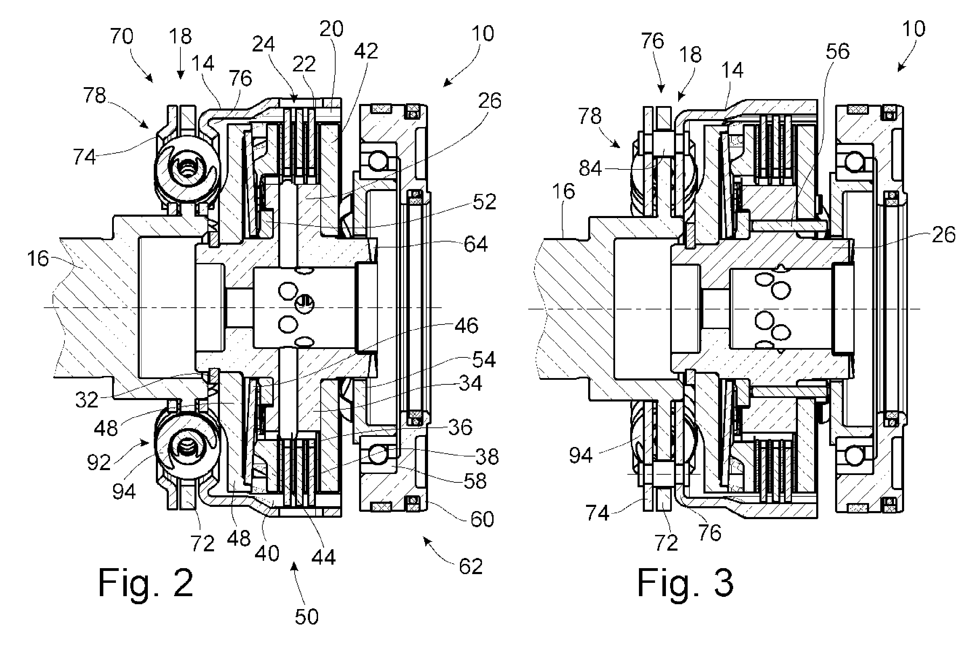

Der Druckring 54 ist über ein Drehentkopplungslager 58 axial bezüglich eines Kolbenelements 60 einer hier nicht weiter dargestellten Ausrückkrafterzeugungsanordnung 62 abgestützt. Diese Ausrückkrafterzeugungsanordnung 62 umfasst im Allgemeinen einen ringartigen Zylinder, in welchem das Kolbenelement 60 axial bewegbar ist und in dessen Zylinderkammer Druckfluid einleitbar ist, um das Kolbenelement 60 in der Darstellung der Fig. 2 oder 3 nach links, also auf die Lamellenkupplung 50 zu zu bewegen und dabei über das Drehentkopplungslager 58, den Druckring 54, die Übertragungselemente 56 und den Druckring 52 die Tellerfeder 46 radial innen zu belasten und bei axialer Verschiebung derselben im radial inneren Bereich auch die Anpressplatte 44 zu entlasten.

Hinsichtlich des vorangehend grundsätzlich beschriebenen Gesamtaufbaus sei noch erwähnt, dass der zweite Reibelemententräger 26 mit einer Axialverzahnungsformation 64 in Drehkopplungseingriff gebracht werden kann mit einer Verzahnung an einem anzutreibenden Organ, hier also der Eingangswelle 30 des Kompressors 12 in einem Fahrzeug. Durch diese Eingangswelle hindurch kann das insbesondere zur Erzeugung einer Kühlwirkung dienende Fluid in einen zentralen Hohlraum 66 im zweiten Reibelemententräger 26 eingeleitet werden. Von diesem kann das Fluid dann nach radial außen in den Bereich der Reibelemente 22, 38 strömen, so dass durch Umströmung derselben Wärme abgeführt werden kann.

Es sei darauf hingewiesen, dass der vorangehend erläuterte Aufbau selbstverständlich in verschiedensten Aspekten ergänzt oder abgeändert werden kann, ohne von den Erfindungsprinzipien abzuweichen.

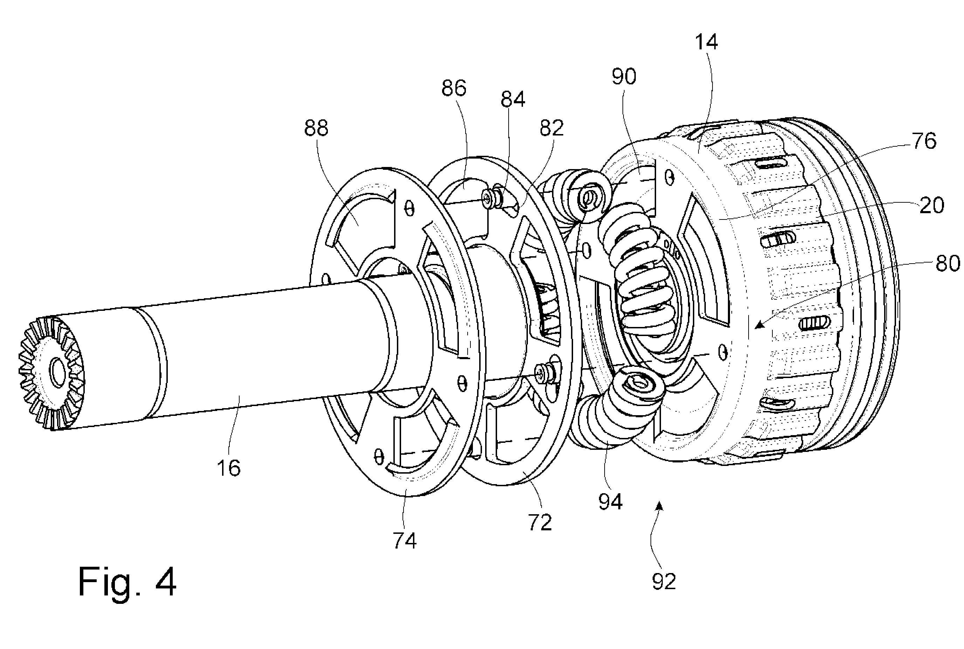

Die Torsionsschwingungsdämpferanordnung 18, welche in den Fig. 2 und 3 vergrößert und in Fig. 4 auch in Explosionsansicht gezeigt ist, umfasst eine an dem wellenartigen Abschnitt 16 vorgesehene Primärseite 70 mit einem Zentralscheibenelement 72, das an dem der Lamellenkupplung 50 naheliegenden Endbereich des Abschnitts 16 integral ausgebildet oder dort beispielsweise durch Verschweißung oder Verschraubung oder Vernietung festgelegt sein kann. Beidseits des Zentralscheibenelements 72 liegen Deckscheibenbereiche 74, 76 einer allgemein mit 78 bezeichneten Sekundärseite der Torsionsschwingungsdämpferanordnung. Dabei erkennt man vor allem auch in der Explosionsdarstellung der Fig. 4, dass der Deckscheibenbereich 76 durch einen Bodenbereich 80 des im Allgemeinen topfartig ausgebildeten ersten Reibelemententrägers 14 bereitgestellt ist. Die beiden Deckscheibenbereiche 74, 76 können über eine Mehrzahl von das Zentralscheibenelement 72 in den jeweiligen Umfangs-Langlöchern 82 durchgreifenden Nietbolzen 84 miteinander fest verbunden sein und sind vorzugsweise als Blechformteile ausgebildet.

Das Zentralscheibenelement 72 und die beiden Deckscheibenbereiche 74, 76 weisen jeweils mehrere Federfenster 86, 88 bzw. 90 auf. Eine Dämpferelementenanordnung 92 umfasst eine Mehrzahl von Schraubendruckfedereinheiten 94, jede beispielsweise umfassend zwei ineinander gestaffelte Schraubendruckfedern. Diese sind in den in Umfangsrichtung aufeinanderfolgend angeordneten Federfenstern 86, 88, 90 des Zentralscheibenelements 72 und der beiden Deckscheibenbereiche 88, 90 unter Vorspannung angeordnet und stützen sich an jeweiligen die Federfenster 86, 88, 90 in Umfangsrichtung begrenzenden Abstützbereichen ab. Durch Umfangskompression der Schraubendruckfedereinheiten 94 können die Primärseite 70 und die Sekundärseite 78 bezüglich einander verdreht werden, so dass bei auftretenden Drehungleichförmigkeiten oder spontan ansteigenden Drehmomenten der wellenartige Abschnitt 18 bezüglich der Lamellenkupplung 50 bzw. des ersten Reibelemententrägers 14 derselben verdreht werden kann. Drehungleichförmigkeiten, die im Bereich eines Antriebsaggregats erzeugt werden, können somit bereits vor Einleitung in die Lamellenkupplung 50 herausgefiltert bzw. gedämpft werden, so dass eine übermäßige Belastung verschiedener im Drehmomentenfluss dann auf die Torsionsschwingungsdämpferanordnung 18 folgende Komponenten weniger stark belastet werden. Auch im Bereich des Kompressors 12 durch Hin- und Herbewegung der in der Fig. 1 nicht erkennbaren Kolben in dem Kompressorgehäuse 100 erzeugte Drehungleichförmigkeiten werden entsprechend gedämpft und nicht oder nur vermindert auf den wellenartigen Abschnitt 16 übertragen.

Ein Überlastschutz für die Dämpferelementenanordnung 92 wird durch die Nietbolzen 84 realisiert, die sich in den zugeordneten Umfangs-Langlöchern 82 nur in begrenztem Ausmaß hin- und herbewegen können und somit den maximalen Realitvdrehwinkel zwischen der Primärseite 70 und der Sekundärseite 78 festlegen.

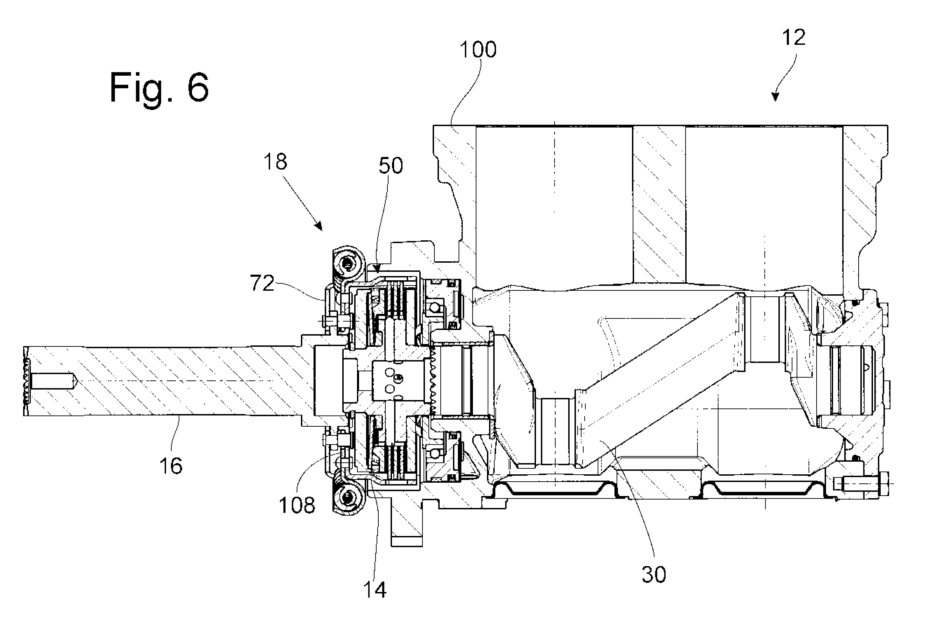

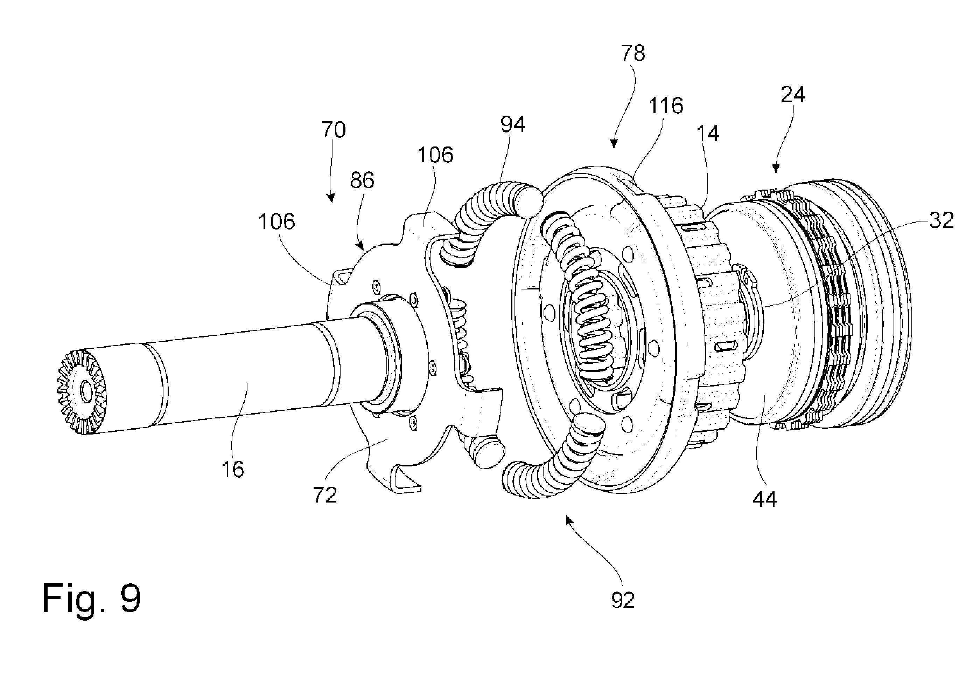

Die Fig. 6 bis 10 zeigen eine alternative Ausgestaltungsform, die sich im Vergleich zu der vorangehend beschriebenen im Wesentlichen durch die Ausgestaltung der Torsionsschwingungsdämpferanordnung unterscheidet. Hinsichtlich der anderen Systembereiche, insbesondere der Ausgestaltung der Lamellenkupplung wird auf die voranstehenden Ausführungen verwiesen.

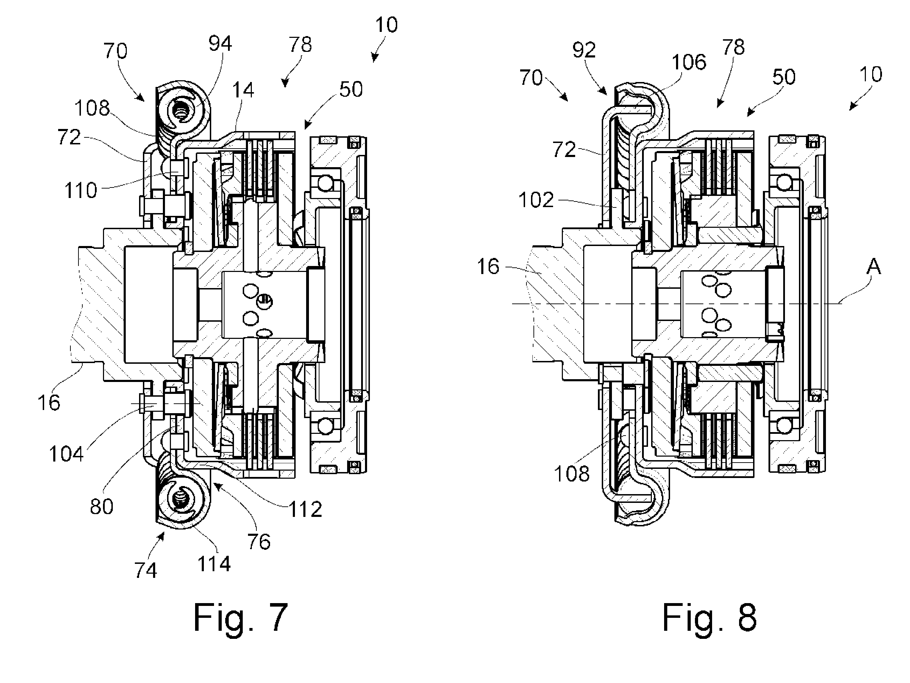

Bei der in Fig. 6 gezeigten Ausgestaltungsvariante ist die Torsionsschwingungsdämpferanordnung 18 wieder mit einem Zentralscheibenelement 72 als wesentlicher Bestandteil der Primärseite 70 ausgebildet. Dieses Zentralscheibenelement 72 ist an einem nach radial außen greifenden Flanschbereich 102 des wellenartigen Abschnitts 16 durch eine Mehrzahl von in der Fig. 7 erkennbaren Nietbolzen 104 festgelegt. In seinem radial äußeren Bereich weist das Zentralscheibenelement 72 axial abgewinkelte Abschnitte 106 auf. Diese begrenzen in Umfangsrichtung zwischen sich die Federfenster 86 des Zentralscheibenelements 72 und greifen in Umfangsrichtung jeweils zwischen die Endbereiche zweier Schraubendruckfederneinheiten in radialer Richtung näherungsweise zentral, also mittig bezogen auf deren Radialerstreckung, ein.

Die Sekundärseite 78 umfasst ein vorzugsweise ebenfalls aus Blech geformtes Bauteil 108, das durch eine Mehrzahl von Nietbolzen an dem ersten Reibelemententräger 14 bzw. dem Bodenbereich 80 desselben festgelegt ist. Radial außen ist dieses Bauteil 108 im Wesentlichen U-förmig gebogen und axial offen, so dass es mit einem radial inneren U-Schenkelbereich 112 einen Deckscheibenbereich 76 bereitstellt und mit einem radial äußeren U-Schenkelbereich 114 den Deckscheibenbereich 74 bereitstellt. Diese beiden Deckscheibenbereiche liegen radial innerhalb bzw. radial außerhalb der axial abgebogenen und zwischen diesen zentral aufgenommenen Abschnitte 106 des Zentralscheibenelements 72. In Umfangsrichtung den Abschnitten 106 entsprechend sind an dem Bauteil 108 Einformungen 116 gebildet, an welchen die Schraubendruckfedereinheiten 94 der Dämpferelementenanordnung 92 sich in Umfangsrichtung bezüglich der Sekundärseite 78 abstützen können. Eine Drehwinkelbegrenzungsfunktion kann hier durch die entsprechende Öffnungen im Bodenbereich 80 des ersten Reibelemententrägers 14 durchsetzenden Nietbolzen 104 realisiert werden, die in diesen Öffnungen sich in begrenztem Ausmaß in Umfangsrichtung bewegen können.

Bei den vorangehend beschriebenen Ausgestaltungsvarianten einer erfindungsgemäß aufgebauten Kopplungsanordnung 10 ist die Torsionsschwingungsdämpferanordnung 18 jeweils nach Art eines trockenlaufenden Zweimassenschwungrads ausgebildet und ist daher in der Lage, bei einfachem und auf kleinem Bauraum zu realisierendem Aufbau eine hohe Betriebssicherheit auch über eine lange Betriebslebensdauer bereitzustellen.

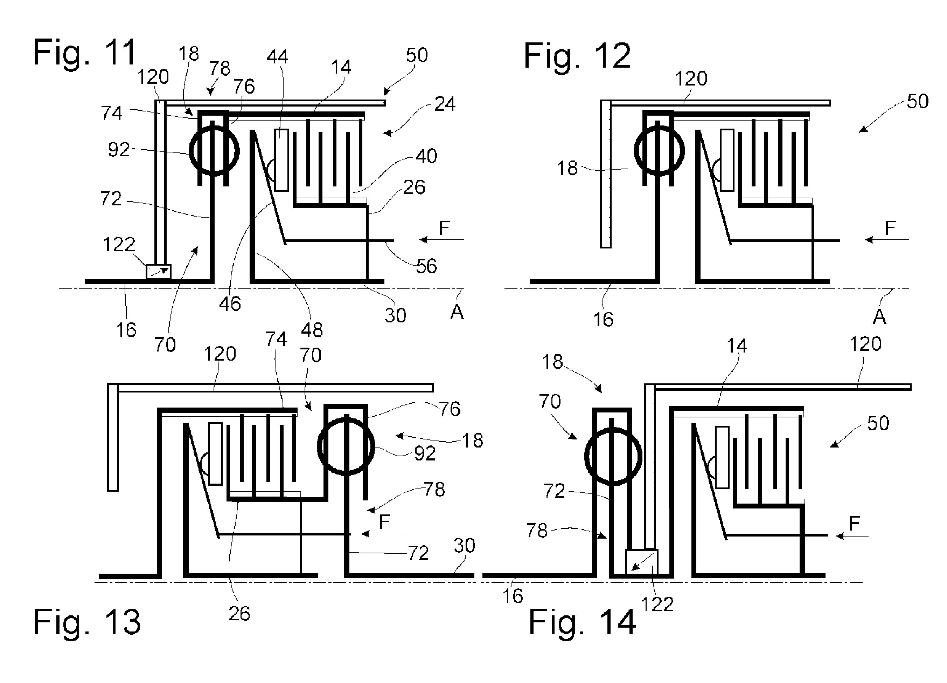

Im Folgenden werden mit Bezug auf die Fig. 11 bis 17 verschiedene Ausgestaltungsarten einer erfindungsgemäßen Kopplungsanordnung unter Miteinbeziehung einer Torsionsschwingungsdämpferanordnung beschrieben. Es sei darauf hingewiesen, dass insbesondere die Lamellenkupplung und deren Wechselwirkung mit der in dem Gehäuse 100 des Kompressors 12 drehbar gelagerten Eingangswelle 30 so sein kann, wie vorangehend detailliert erläutert.

Die Fig. 11 veranschaulicht eine Ausgestaltungsform, bei der die Reibungskupplung 50 zusammen mit der Torsionsschwingungsdämpferanordnung 18 in einem gemeinsamen Gehäuse 120 untergebracht ist, das durch eine Dichtungsanordnung 122 fluiddicht bezüglich des wellenartigen Abschnitts 16 abgeschlossen ist. Dieses Gehäuse 120 kann an dem Kompressorgehäuse 100 festgelegt sein bzw. zumindest teilweise auch durch dieses bereitgestellt sein.

Durch die Anordnung der Lamellenkupplung 50 zusammen mit der Torsionsschwingungsdämpferanordnung 18 in dem Gehäuse 120 kann dafür gesorgt werden, dass nicht nur die verschiedenen Systembereiche der Lamellenkupplung 50 mit Fluid umströmt und dadurch gekühlt werden, sondern auch die Torsionsschwingungsdämpferanordnung 18. Neben dem Kühl- bzw. Schmiereffekt wird dadurch auch eine weitergehende Abfuhr von Schwingungsenergie gewährleistet, da die verschiedenen bei Auftreten von Drehungleichförmigkeiten sich bezüglich einander um die Drehachse A verdrehenden Systembereiche des Torsionsschwingungsdämpfers 18 sich in dem viskosen Medium, also dem Schmierfluid, bewegen müssen.

Die Fig. 12 zeigt eine Ausgestaltungsvariante, welche, ebenso wie die in Fig. 11 gezeigte Ausgestaltungsvariante, hinsichtlich ihres Aufbaus grundsätzlich dem in Fig. 1 bis 5 gezeigten entsprechen kann. Man erkennt auch hier wieder das Gehäuse 120, welches so ausgebildet sein kann, dass es an ein Antriebsaggregat angeflanscht werden kann, so dass alle Systemkomponenten, also insbesondere die Torsionsschwingungsdämpferanordnung 18, die Lamellenkupplung 50 und ggf. auch der Kompressor bzw. Teile desselben in einem gemeinsamen Nassraum untergebracht sind.

Eine ähnliche Variante ist in Fig. 13 gezeigt. Ein Unterschied besteht hier jedoch darin, dass die Torsionsschwingungsdämpferanordnung 18 nunmehr im Drehmomentenfluss zwischen dem zweiten Reibelemententräger 26 und der Eingangswelle 30 liegt. Die Primärseite 70 ist in Verbindung mit dem zweiten Reibelemententräger 26, während die Sekundärseite 78 in Verbindung mit der Eingangswelle 30 ist. Man erkennt hier eine Ausgestaltungsvariante, bei welcher die beiden Deckscheibenbereiche 74, 76 Teil der Primärseite 70 sind und das Zentralscheibenelement 72 Teil der Sekundärseite 78 ist. Dies könnte selbstverständlich auch umgekehrt sein.

Bei der in Fig. 14 gezeigten Ausgestaltungsvariante ist die Torsionsschwingungsdämpferanordnung 18 außerhalb des Gehäuses 120 angeordnet, das wiederum fluiddicht bezüglich des ersten Reibelemententrägers 14 bzw. eines beispielsweise wieder als wellenartiger Abschnitt ausgebildeten Antriebsorgans ist. Diese Variante ist daher vorteilhaft, da damit eine Modulbauweise erreicht werden kann, bei welcher der Kompressor zusammen mit den im Gehäuse 120 angeordneten Baugruppen, insbesondere also der Lamellenkupplung 50, zusammengefasst werden kann und dann nachfolgend die Torsionsschwingungsdämpferanordnung 70 mit ihrer Sekundärseite 78, hier beispielsweise ausgebildet als Zentralscheibenelement 72 mit dem ersten Reibelemententräger 14 gekoppelt werden kann. Dabei kann zuvor die Torsionsschwingungsdämpferanordnung 18 mit ihrer Primärseite 70 an dem wellenartigen Abschnitt 16 angebracht worden sein. Hier kann also zu einer standardmäßig aufgebauten Kopplungseinrichtung, die grundsätzlich noch keine Torsionsschwingungsdämpferanordnung 18 umfasst, bei Bedarf eine derartige Torsionsschwingungsdämpferanordnung 18 hinzugenommen werden.

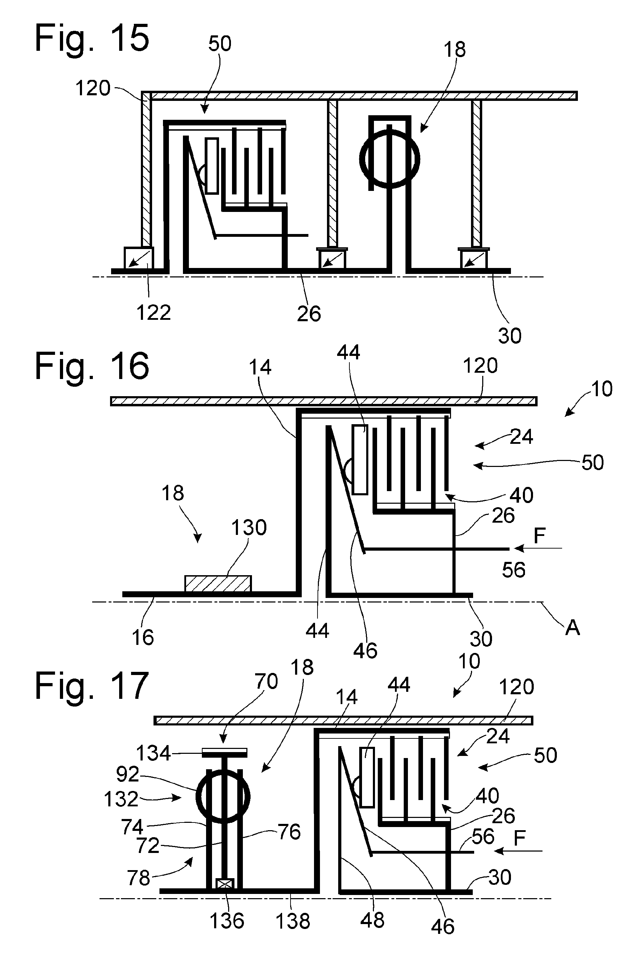

Auch bei der in Fig. 15 gezeigten Ausgestaltungsform ist die Torsionsschwingungsdämpferanordnung 18 als autarke Einheit, also im Wesentlichen losgelöst von der Lamellenkupplung 50, bereitgestellt. Diese beiden Baugruppen können in einem Gehäuse 120 angeordnet sein und somit gleichermaßen mit dem kühlenden, schmierenden und schwingungsdämpfenden Fluid umströmt werden. Insbesondere könnte hier vorgesehen sein, für jede dieser Baugruppen 50, 18 einen eigenen Gehäuseabschnitt bereitzustellen, um somit jede dieser Einheiten für sich möglicherweise auch fluiddicht geführt bereitzustellen und somit den Modulcharakter zu verstärken.

Bei den vorangehend beschriebenen Ausgestaltungsformen, bei welchen die Torsionsschwingungsdämpferanordnung 18 in dem fluiddicht abgeschlossenen Gehäuse 120 bzw. dem darin gebildeten Nassraum angeordnet ist, ist es selbstverständlich möglich, eine gezielte Fluidführung vorzusehen, um in definierter Weise auch die Torsionsschwingungsdämpferanordnung 18 mit Fluid zu versorgen bzw. anzuströmen. Bei denjenigen Ausgestaltungsformen, bei welchen die Torsionsschwingungsdämpferanordnung 18 nicht in diesem Nassraum angeordnet ist, also nicht gemeinsam mit der Lamellenkupplung 50 mit Schmierfluid versorgt werden kann, kann es vorteilhaft sein, diese als selbstgeschmierte, also beispielsweise mit Schmiermittelkammern ausgebildete Anordnung bereitzustellen, bei welcher die Schraubendruckfedereinheiten möglicherweise dann auch mehrere in Umfangsrichtung aufeinander folgende Federn auf weisen können, die über Gleitschuhe oder dergleichen aneinander und nach radial außen abgestützt sind.

Eine alternative Ausgestaltungsform ist in Fig. 16 gezeigt. Der grundsätzliche Aufbau der Lamellenkupplung 50 kann wieder dem vorangehend mit Bezug auf die Fig. 1 bis 5 detailliert beschriebenen entsprechen. Die Torsionsschwingungsdämpferanordnung 18 ist hier nur prinzipiell im Bereich des wellenartigen Abschnitts 16 veranschaulicht und nicht mit dem vorangehend erläuterten Aufbau eines Zweimassenschwungrads mit Primärseite, Sekundärseite und dieser koppelnden Dämpferfederanordnung ausgebildet. Vielmehr kann bei dieser Ausgestaltungsvariante die Torsionsschwingungsdämpferanordnung 18 ein oder mehrere Torsionselemente 130 umfassen, die zwei Teilbereiche des wellenartigen Abschnitts 16 miteinander kopplen können und bei auftretenden Drehbelastungen um die Drehachse A tordierbar sein können. Beispielsweise kann ein mit eckigem oder rundem Profil ausgebildeter Torsionsstab, also eine Drehstabfeder, vorgesehen sein. Dies gestattet die Kombination einer Torsionsschwingungsdämpferanordnung von vergleichsweise einfachem Aufbau mit einem herkömmlichen Aufbau einer Kopplungsanordnung bzw. Lamellenkupplung, ohne an dieser zusätzliche bauliche Änderungen vornehmen zu müssen.

Eine weitere Variante ist in Fig. 17 gezeigt. Hier ist die grundsätzlich wieder nach Art eines Zweimassenschwungrads aufgebaute Torsionsschwingungsdämpferanordnung 18 in ein allgemein mit 132 bezeichnetes und als Antriebsorgan wirksames Antriebsrad eingegliedert. Dieses Antriebsrad 132 weist in seinem Außenumfangsbereich beispielsweise eine Verzahnung 134 auf, mit welcher es in Kämmeingriff steht mit einer Verzahnung an einem antreibenden Zahnrad. Die Primärseite 70 der Torsionsschwingungsdämpferanordnung 18 umfasst hier wieder ein Zentralscheibenelement 72, an dessen beiden axialen Seiten die Deckscheibenbereiche 74, 76 angeordent sind. In an sich bekannter Weise wirken zwischen dem Zentralscheibenelement 72 und den Deckscheibenbereichen 74, 76 die Dämpferfedern bzw. Schraubendruckfedern der Dämpferelementenanordnung 92. Eine Zentrierung zwischen der Primärseite 70 und der Sekundärseite 78 kann über eine Axial- oder/und Radiallageranordnung 136 realisiert sein.

Die beiden Deckscheibenelemente 74, 76 können an dem ersten Reibelemententräger 14 bzw. einem wellenartigen Vortsatz 138 desselben beispielsweise durch Materialschluss, wie zum Beispiel Verschweißen, oder Formschluss, wie zum Beispiel Verzahnungseingriff, drehfest gehalten sein. Auch hier wird also ein modulartiger Aufbau bereitgestellt, bei welchem dann, wenn dies systembedingt erforderlich oder vorteilhaft ist, ein mit einer Torsionsschwingungsdämpferanordnung 18 ausgestattetes Antriebsrad 132 oder ggf. ein starres Antriebsrad eingesetzt werden kann.

Abschließend sei darauf hingewiesen, dass selbstverständlich bei den verschiedenen dargestellten Ausgestaltungsvarianten insbesondere auch hinsichtlich des Aufbaus der Torsionsschwingungsdämpferanordnung Änderungen vorgenommen werden können. So kann selbstverständlich die Dämpferelementenanordnung an Stelle der gezeigten Schraubendruckfedern andere elastisch wirksame und bei Belastung komprimierbare bzw. verformbare Bauteile zur Schwingungsdämpfung bereitstellen, wie zum Beispiel Elastomerblöcke oder dergleichen. Auch ist es selbstverständlich, dass eine Kombination der verschiedenen gezeigten Ausgestaltungsvarianten möglich ist, um sowohl im Drehmomentenfluss vor dem ersten Reibelemententräger 14, als auch im Drehmomentenfluss nach dem zweiten Reibelemententräger 26 (hier bezogen auf einen Drehmomentenfluss von einem Antriebsaggregat auf die Eingangswelle 30) eine Schwingungsentkopplung zu realisieren. Grundsätzlich ist es auch denkbar, zumindest eines oder einige der Reibelemente der beiden Gruppen 24, 40 von Reibelementen nach Art von Kupplungsscheiben mit in diese integrierte Torsionsschwingungsdämpfer auszugestalten.

## Patentansprüche

1. Kopplungsanordnung zur wahlweisen Drehkopplung einer Eingangswelle, insbesondere eines Kompressors in einem Fahrzeug, mit einem Antriebsorgan, umfassend:
- einen mit dem Antriebsorgan zur gemeinsamen Drehung um eine Drehachse (A) zu koppelnden ersten Reibelemententräger (14), mit welchem die Reibelemente (22) einer ersten Gruppe (24) von Reibelementen drehfest und bezüglich diesem axial bewegbar gekoppelt sind,
- einen mit der Eingangswelle (30) zur gemeinsamen Drehung um die Drehachse (A) zu koppelnden zweiten Reibelemententräger (26), mit welchem die Reibelemente (38) einer zweiten Gruppe (40) von Reibelementen drehfest und bezüglich diesem axial bewegbar gekoppelt sind,
- eine Kraftbeaufschlagungsanordnung (46), durch welche die Reibelemente (22, 38) der ersten Gruppe (24) und der zweiten Gruppe (40) über eine Anpressplatte (44) in Reibwechselwirkung miteinander pressbar sind,
- im Drehmomentübertragungsweg von dem Antriebsorgan zum ersten Reibelemententräger (14) oder/und im Drehmomentübertragungsweg von dem zweiten Reibelemententräger (26) zu der Eingangswelle eine Torsionsschwingungsdämpferanordnung (18).

2. Kopplungsanordnung nach Anspruch 1, **dadurch gekennzeichnet, dass** die Torsionsschwingungsdämpferanordnung (18) eine Primärseite (70) in Verbindung mit dem Antriebsorgan (16), eine Sekundärseite (78) in Verbindung mit dem ersten Reibelemententräger (14) sowie eine die Primärseite (70) und die Sekundärseite (78) koppelnde Dämpferelementenanordnung (92) umfasst.

3. Kopplungsanordnung nach Anspruch 2, **dadurch gekennzeichnet, dass** das Antriebsorgan (16) einen Bereich der Primärseite (70) bereitstellt.

4. Kopplungsanordnung nach Anspruch 2 oder 3, **dadurch gekennzeichnet, dass** der erste Reibelemententräger (14) einen Bereich der Sekundärseite (78) bereitstellt.

5. Kopplungsanordnung nach einem der Ansprüche 2 bis 4, **dadurch gekennzeichnet, dass** die Primärseite (70) ein Zentralscheibenelement (72) umfasst und die Sekundärseite (78) wenigstens bereichsweise beidseits des Zentralscheibenelements (72) Deckscheibenbereiche (74, 76) umfasst.

6. Kopplungsanordnung nach Anspruch 4 und 5, **dadurch gekennzeichnet, dass** der erste Reibelemententräger (14) im Wesentlichen einen Deckscheibenbereich (76) bereitstellt.

7. Kopplungsanordnung nach Anspruch 1, **dadurch gekennzeichnet, dass** die Torsionsschwingungsdämpferanordnung (18) in das Antriebsorgan (16; 132) integriert ist.

8. Kopplungsanordnung nach Anspruch 7, **dadurch gekennzeichnet, dass** die Torsionsschwingungsdämpferanordnung (18) eine Primärseite (70) und eine über eine Dämpferelementenanordnung (92) mit der Primärseite (70) gekoppelte Sekundärseite (78) umfasst, welche mit dem ersten Reibelemententräger (14) verbunden ist.

9. Kopplungsanordnung nach Anspruch 7, **dadurch gekennzeichnet, dass** die Torsionsschwingungsdämpferanordnung (18) wenigstens ein Torsionselement (130) umfasst.

10. Kopplungsanordnung nach einem der Ansprüche 1 bis 9, **dadurch gekennzeichnet, dass** der zweite Reibelemententräger (26) mit einer Primärseite (70) der Torsionsschwingungsdämpferanordnung (18) verbunden ist oder einen Bereich derselben bereitstellt, dass die Eingangswelle (30) mit einer Sekundärseite (78) der Torsionsschwingungsdämpferanordnung (18) verbunden ist oder einen Bereich derselben bereitstellt und dass die Primärseite (70) und die Sekundärseite (78) über eine Dämpferelementenanordnung (92) miteinander gekoppelt sind.

11. Kopplungsanordnung nach einem der Ansprüche 1 bis 10, **dadurch gekennzeichnet, dass** die Torsionsschwingungsdämpferanordnung (18) und der erste Reibelemententräger (14) mit der ersten Gruppe (24) von Reibelementen sowie der zweite Reibelemententräger (26) mit der zweiten Gruppe (40) von Reibelementen in einem Gehäuse (120) angeordnet sind.

12. Kopplungsanordnung nach Anspruch 11, **dadurch gekennzeichnet, dass** das Gehäuse (120) gegen Fluidaustritt abgeschlossen ist.

13. Kombination eines Kompressors, insbesondere für ein Fahrzeug, mit einer Kopplungsanordnung nach einem der vorangehenden Ansprüche, deren zweiter Reibelemententräger (26) mit einer Eingangswelle (30) des Kompressors (100) zur gemeinsamen Drehung um die Drehachse (A) verbunden ist.
